# EUROPEAN PATENT SPECIFICATION

(11) **EP 4 404 047 B1**
(45) Date of publication and mention of the grant of the patent: **30.07.2025**
(21) Application number: 24152672.2
(22) Date of filing: 18.01.2024
(51) Int. Cl.: G06F 3/12, G06F 40/10, G06N 3/045, G06N 3/0475, G06N 3/094

(54) **METHOD AND SYSTEM FOR DIGITAL PRINTING OF IMAGES ON PHYSICAL SUPPORTS**
VERFAHREN UND SYSTEM ZUM DIGITALEN DRUCKEN VON BILDERN AUF PHYSISCHEN TRÄGERN
PROCEDE ET SYSTEME D'IMPRESSION NUMERIQUE D'IMAGES SUR SUPPORTS PHYSIQUES

(30) Priority: 20.01.2023 IT 202300000861
(43) Date of publication of application: 24.07.2024
(73) Proprietor: Rotas Italia S.r.l., 31100 Treviso (IT)
(72) Inventor: CELANTE, Francesco, 31100 Treviso (IT)
(74) Representative: Dragotti & Associati S.R.L.

(56) References cited:
- JP-A- 2020 042 758
- US-A1- 2022 348 003
- US-A1- 2022 391 649

## Description

The present invention relates to the technical field of digital printing and concerns in particular a method for digital printing of images on physical supports.

The invention also relates to a system for digital printing of images on physical supports. As is known in the field, digital printing involves a first step for generating a digital image to be printed.

The digital image may be generated, for example, by means of known graphics software or may be selected from a database containing of a series of images catalogued depending on their type, subject-matter, colours, etc.

Each digital image is formed by a predefined number of pixels, which determines its resolution; each of the pixels is represented by a set of three values (generally ranging between 1 and 255) which indicate the intensity of the three basic colours: red, green and blue

The predetermined format of the digital image thus obtained is defined RGB, an acronym for the colours red, green and blue; this format is used to display colour images on screens, such as TV screens, computer monitors and smartphone screens.

The method for generation of the digital image operates in an "additive" mode, namely the colours of the image are obtained by the sum of the luminosity of each of the three main colours.

Before proceeding with printing of the image it is also required to convert the digital image into a format suitable for printing, both from the point of view of "chromatics" and from a "spatial" point of view.

From the point of view of "chromatics", the digital image must be converted from the RGB format into the CMYK format and/or spot colour, which allows the printing of the image on physical supports; the letters of the acronym CMYK indicate the colours: cyan, magenta, yellow and black in English.

The CMYK format, differently from the RGB format, uses a "subtractive" method for generating the colours, namely the colour of the image is obtained from the difference in luminosity of each colour.

The four abovementioned primary colours of the CMYK format may also be supplemented by spot colours, namely colours obtained with inks used to reproduce specific colours which cannot be reproduced by means of the combination of primary colours.

Furthermore, as already mentioned, the digital image must be converted into a format suitable for printing also from a "spatial" point of view before proceeding with printing.

In other words, the conversion of the digital image involves the pixels of the digital image being converted into printed dots of the printed image, namely the digital measurement unit (PPI, pixels per inch) is converted into a physical measurement unit (DPI, dots per inch) on which the printing quality of the image will then depend.

The abovementioned digital printing method, while being favourably regarded, is not without drawbacks.

US 2022/348003 A1 discloses a method of generating a digital image from received elements items by means of artificial intelligence (machine learning, neural network). The digital image is then sent to a printer for printing. US 2022/391649 A1 discloses a method of converting a print job, which may be in the form of raster data, to printer-ready format and sent to a printer for printing, the format conversion use artificial intelligence.

It is clear, in fact, that the step of generating a digital image, in the case where an original image - never reproduced before - is to be obtained, is time-consuming and costly.

It is necessary, in fact, for a designer to design from scratch the graphics content required by a client, for example an image to be associated with an advertisement leaflet or a label, using the graphics software commonly used in the field.

Although important improvements have been made in the field, the human component is of fundamental importance in this respect since the designer, based on his/her personal experience, must firstly interpret the request received from the client and then convert this request into a new appealing image.

Therefore, one drawback consists in the fact that such a method, in addition to being time-consuming, does not always result in an outcome which satisfies the initial expectations; often, in fact, the image created must be modified in accordance with further instructions provided by the client.

Once the desired digital image has been created, further problems to be solved may arise, in particular in connection with the quality, colours and resolution of the printed image. A first drawback consists in the fact that the image conversion process does not take into account, for example, the material of the physical support, the surface roughness of the physical support and the intrinsic features of the surface of the physical support. The main object of the present invention is to provide a method and a system for the digital printing of images on physical supports, able to solve the aforementioned problems.

A particular task of the present invention is to provide a method and a system of the type described above which are able to generate original and unique images to be printed, limiting the need for human intervention.

A further task of the present invention is to provide a method and a system of the type described above which are able to print high resolution images starting from a low resolution of the images.

Another task of the present invention is to provide a method and a system of the type described above which are able to provide physical supports, such as labels, which are personalized with printed images depending on the clients' requirements.

A further task of the present invention is to provide a method and a system of the type described above which are also able to take into account the features of the physical support on which the image is printed.

The main tasks and object described above are achieved with a method and a system for the digital printing of images on physical supports according with claim 1 and claim 9, respectively.

In order to illustrate more clearly the innovative principles of the present invention and its advantages compared to the prior art, an example of embodiment of the system implementing the method according to the present invention will be described below with the aid of the attached figures. In particular:

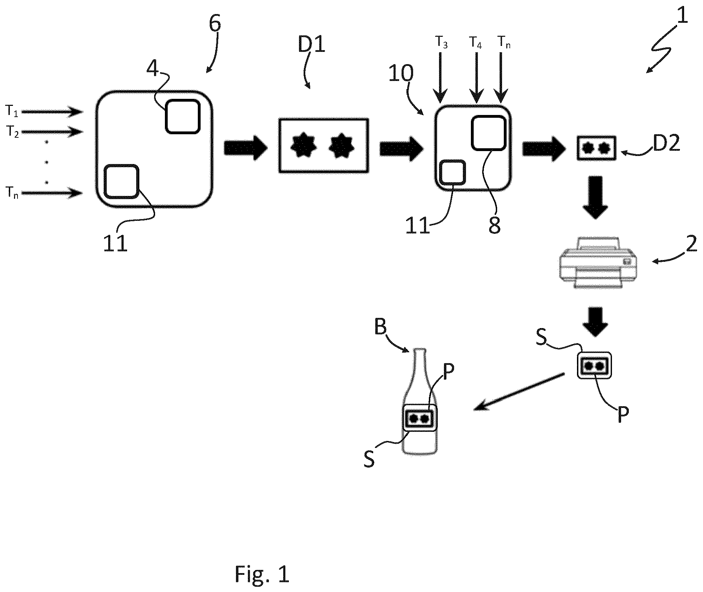

- Figure 1 is a schematic view of the system for implementing the method for printing images on physical supports according to the present invention.

The present invention which is provided solely by way of a non-limiting illustration of the scope of protection of the invention refers to a method for printing images P on physical supports S and to the associated system 1 allowing the implementation of said method.

The physical support S on which the images P are printed consists preferably, but not exclusively, of a label S intended to be applied onto an article, such as a bottle B, as shown in Figure 1, or a food package.

Obviously, the article may also consist of other articles, objects or devices different from those indicated above, without thereby departing from the scope of protection of the present invention.

The label S, in addition to the printed images P, may also comprise a series of information relating to the manufacturer of the article or information regarding the product contained in the article.

The system 1 for implementing the method is shown schematically in Figure 1 and comprises the components described below, also with reference to the method.

The method comprises preferably the following steps:
i) generating a digital image D1 with a predetermined format;
ii) converting the digital image D1 into an image D2 with a format suitable for printing on a physical support S;
iii) printing the converted image D2 on the physical support S in order to obtain the physical support S with the printed image P.

Advantageously, the predetermined format of the digital image D1 before conversion is RGB while the format suitable for printing the image D2 following convention is CMYK.

The conversion step ii) is performed using graphics programs or software known in the field and installed in an electronic device such as a computer.

Furthermore, the conversion of the digital image D1 involves the pixels of the digital image D1 being converted into printed dots of the converted image D2, as explained above with reference to the prior art.

In a manner known per se, the printing step iii) is performed by means of a printing device 2, such as a laser or inkjet printer.

A particular aspect of the method according to the present invention consists in the fact that at least the step i) for generating the digital image D1 is performed by means of a processing process performed by means of at least one artificial intelligence software algorithm 4.

The processing process uses a series of inputs T₁, T₂, Tₙ... comprising images and/or texts and/or keywords, while the output of the processing process consists of the digital image D1 which will then be printed.

Therefore, the digital image D1 generated during the step i) of the method is obtained on the basis of the images and/or texts and/or keywords processed by the artificial intelligence algorithm 4, or from a combination thereof.

The images and/or texts and/or keywords may be supplied to the operator managing the printing method by the client who wishes to obtain an article with the printed image P.

In this way, the client may obtain articles with original and unique printed images P which are personalized in accordance with their commercial needs.

Furthermore, the artificial intelligence software algorithm 4 may carry out the processing process and generate consequently the unique and sole digital image D1 based on starting images stored in a suitable medium, as described below, and intended to be correlated with the inputs T₁, T₂, Tₙ... and combined together to obtain the digital image D1.

Conveniently, the at least one artificial intelligence software algorithm 4 for carrying out the step i) is installed in a software module 6 or processing unit of an electronic device, such as a smartphone, computer or tablet. The software module 6 may consist of a software application or mobile application.

The electronic device and the software module 6 advantageously comprise interface means 11 for loading the images and/or texts and/or keywords which form the inputs T₁, T₂, Tₙ... for the processing process performed by the artificial intelligence software algorithm 4 and for displaying the generated digital image D1.

For example, the interface means 11 consist of the screen of the electronic device and the graphics interface of the software application configured to allow insertion of the images (in the form of jpeg or pdf files for example) and/or texts and/or keywords by the operator.

In this connection, the at least one artificial intelligence software algorithm 4 may also comprise a text encoder which identifies a type of artificial neural network configured to process and map the texts and/or keywords in relation to a numerical coding thereof so as to maintain their meaning.

The at least one artificial intelligence software algorithm 4 may also comprise a series of generative adversarial neural networks which identifies a set of deep learning algorithms configured to generate the digital images D1.

The texts and/or keywords which are numerically encoded by means of the text encoder are sent to the generative adversarial neural networks in order to obtain the digital image D1.

Furthermore, the at least one software algorithm 4 for performing step i) may be connected to a database (not shown in Figure 1) which stores, for example, a series of starting images of the type described above to be combined in order to obtain the final digital image D1 and/or a series of texts and/or keywords.

The database may also be installed in the electronic device indicated above or may be installed in a cloud system connected to the electronic device.

In accordance with a further embodiment of the method of the present invention, the conversion step ii) may be performed using a dedicated graphics software with the aid of an additional artificial intelligence software algorithm 8.

Therefore, the additional artificial intelligence software algorithm 8 implements the graphics software for conversion of the digital image D1.

The additional artificial intelligence software algorithm 8 may be different from or correspond to the software algorithm 4 used to carry out step i) of the method and may be installed in a software module 10 or processing unit of an additional electronic device or in the same electronic device indicated above with reference to the first artificial intelligence software algorithm 4.

The additional device or software module 10 may also comprise interface means 11 similar to those indicated above with reference to the software module 6.

Advantageously, the additional artificial intelligence software algorithm 8 is configured to carry out an additional processing process in order to vary the printing parameters of the format of the converted image D2.

In this additional processing process, the inputs T₃, T₄, Tₙ... comprise the density of the pixels, namely the resolution of the digital image D1, the dimensions of the printed image P to be obtained, the material of the physical support S, the surface roughness of the physical support S and the intrinsic characteristics of the surface of the physical support S, as well as the digital image D1 obtained with step i).

The output of the additional processing process consists of a converted image D2 such that the printed image P has a resolution preferably equal to at least 200/300 dpi. Preferably, the artificial intelligence software algorithm 4 used in step i) and/or the additional artificial intelligence software algorithm 8 used in step ii) are of the machine learning type.

The method according to the present invention may also involve steps for training the artificial intelligence software algorithms 4, 8 so as to refine the steps for generation and conversion of the digital images D1.

Figure 1 shows in schematic form the system 1 for implementing the method, comprising:
- the software module 6 installed in an electronic device and configured to generate the digital image D1;
- the additional software module 10 installed in an electronic device and configured to convert the digital image D1 into the image D2 with a suitable format for printing;
- a device 2 for printing the converted image D2 on a physical support S so as to obtain the physical support S with the printed image P, the printing device 2 being connected to the additional software module 10.

As already mentioned, at least the software module 6 comprises interface means 11 configured to load images and/or texts and/or keywords into the software module 6 and at least one artificial intelligence software algorithm 4 configured to process the images and/or texts and/or keywords and to generate consequently the digital image D1.

Advantageously, the additional software module 10 also comprises a respective artificial intelligence software algorithm 8 configured to perform a processing process during conversion of the digital image D1 into an image D2 with a format suitable for printing. The interface means 11 consist, for example, of the screen of the electronic device and the graphics interface of the software module 6.

The system 1 according to the present invention preferably also comprises the database described above with reference to the method.

From the above description it is now clear how the method according to the present invention is able to achieve advantageously the predefined objects.

In particular, by using respective artificial intelligence software algorithms for generation and conversion of the unique and original digital images it is possible to obtain physical supports with high-quality high-resolution original printed images.

Obviously, the above description of embodiments applying the innovative principles of the present invention is provided by way of example of these innovative principles and must therefore not be regarded as limiting the scope of the rights claimed herein.

## Claims

1. Method for digital printing of images (P) on physical supports (S), the method comprising the following steps:
i) generating a digital image (D1) with a predetermined format;
ii) converting the digital image (D1) into an image (D2) with a format suitable for printing on a physical support (S);
iii) printing the converted image (D2) on the physical support (S) in order to obtain the physical support (S) with the printed image (P);
wherein at least said step i) is performed by means of a process for the processing, by at least one artificial intelligence software algorithm (4), of a series of inputs (T₁, T₂, Tₙ...) comprising images and/or texts and/or keywords, the digital image (D1) representing the output of the processing process in said step i); and
in that said step ii) is performed by means of a dedicated software with the aid of an additional artificial intelligence software algorithm (8), said additional artificial intelligence software algorithm (8) performing an additional processing process in order to vary the printing parameters of the converted format of said digital image (D1); and
in that the inputs (T3, T4, Tn...) for said additional processing process comprise the pixel density, namely the resolution, of the digital image (D1), the dimensions of the printed image (P), the material of the physical support (S), the surface roughness of the physical support (S) and the intrinsic characteristics of the surface of the physical support (S), the output consisting of a converted image (D2) so that the printed image (P) has a predetermined resolution.

2. Method according to the preceding claim, **characterized in that** the predetermined format of said digital image (D1) is RGB and the format suitable for printing the converted image (D2) is CMYK.

3. Method according to the claim 1, **characterized in that** the resolution of said printed image (P) is at least 200/300 dpi.

4. Method according to any one of the preceding claims, **characterized in that** the artificial intelligence software algorithm (4) used in said step i) and/or the additional artificial intelligence software algorithm (8) used in said step ii) are of the machine learning type.

5. Method according to any one of the preceding claims, **characterized in that** at least the software algorithm (4) for performing the step i) is installed in a software module (6) of an electronic device, said electronic device being configured to be connected to a printing device (2) intended to carry out said step iii).

6. Method according to the preceding claim, **characterized in that** said electronic device and/or said software module (6) comprise interface means (11) for loading said images and/or said texts and/or said keywords which form the inputs (T₁, T₂, Tₙ...) for the processing process.

7. Method according to any one of the preceding claims, **characterized in that** said at least one artificial intelligence software algorithm (4) for performing said step i) is connected to a database in which a series of starting images and/or texts and/or keywords are stored.

8. Method according to any one of the preceding claims, **characterized in that** said physical support (S) is a label intended to be applied onto an article.

9. System (1) for digital printing of images (P) on physical supports (S), comprising:
- a software module (6) installed in an electronic device and configured to generate a digital image (D1);
- an additional software module (10) installed in an electronic device and configured to convert the digital image (D1) into an image (D2) with a format suitable for printing;
- a device (2) for printing the converted image (D2) on a physical support (S) so as to obtain the physical support (S) with the printed image (P), said printing device (2) being connected to the additional software module (10);
wherein at least the software module (6) comprises interface means (11) configured to load images and/or texts and/or keywords into said software module (6) and at least one artificial intelligence software algorithm (4) configured to process the images and/or texts and/or keywords and to generate the digital image (D1); and
in that said additional software module (10) comprises a respective artificial intelligence software algorithm (8) configured to perform an additional processing process during conversion of the digital image (D1) into an image (D2) with a format suitable for printing, the inputs (T3, T4, Tn...) for said additional processing process comprising the pixel density, namely the resolution, of the digital image (D1), the dimensions of the printed image (P), the material of the physical support (S), the surface roughness of the physical support (S) and the intrinsic characteristics of the surface of the physical support (S), the output consisting of a converted image (D2) so that the printed image (P) has a predetermined resolution.

## Patentansprüche

1. Verfahren zum digitalen Drucken von Bildern (P) auf physischen Trägern (S), wobei das Verfahren die folgenden Schritte umfasst:
i) Erzeugen eines digitalen Bildes (D1) mit einem vorbestimmten Format;
ii) Konvertieren des digitalen Bildes (D1) in ein Bild (D2) mit einem Format, das zum Drucken auf einem physischen Träger (S) geeignet ist;
iii) Drucken des konvertierten Bildes (D2) auf den physischen Träger (S), um den physischen Träger (S) mit dem gedruckten Bild (P) zu erhalten;
wobei zumindest der Schritt i) mittels eines Prozesses zum Verarbeiten, durch zumindest einen Software-Algorithmus der künstlichen Intelligenz (4), einer Reihe von Eingaben (T₁, T₂, Tₙ...), die Bilder und/oder Texte und/oder Schlüsselwörter umfassen, durchgeführt wird, wobei das digitale Bild (D1) die Ausgabe des Verarbeitungsprozesses in dem Schritt i) darstellt; und in dem der Schritt ii) mittels einer dedizierten Software mit Hilfe eines zusätzlichen Software-Algorithmus der künstlichen Intelligenz (8) durchgeführt wird, wobei der zusätzliche Software-Algorithmus der künstlichen Intelligenz (8) einen zusätzlichen Verarbeitungsprozess durchführt, um die Druckparameter des konvertierten Formats des digitalen Bildes (D1) zu variieren; und
in dem die Eingaben (T3, T4, Tn...) für den zusätzlichen Verarbeitungsprozess die Pixeldichte, nämlich die Auflösung, des digitalen Bildes (D1), die Abmessungen des gedruckten Bildes (P), das Material des physischen Trägers (S), die Oberflächenrauheit des physischen Trägers (S) und die intrinsischen Eigenschaften der Oberfläche des physischen Trägers (S) umfasst, wobei die Ausgabe aus einem konvertierten Bild (D2) besteht, sodass das gedruckte Bild (P) eine vorbestimmte Auflösung aufweist.

2. Verfahren nach dem vorhergehenden Anspruch, **dadurch gekennzeichnet, dass** das vorbestimmte Format des digitalen Bildes (D1) RGB ist und das zum Drucken des konvertierten Bildes (D2) geeignete Format CMYK ist.

3. Verfahren nach Anspruch 1, **dadurch gekennzeichnet, dass** die Auflösung des gedruckten Bildes (P) zumindest 200/300 dpi beträgt.

4. Verfahren nach einem der vorhergehenden Ansprüche, **dadurch gekennzeichnet, dass** der in Schritt i) verwendete Software-Algorithmus der künstlichen Intelligenz (4) und/oder der in Schritt ii) verwendete zusätzliche Software-Algorithmus der künstlichen Intelligenz (8) vom Typ des maschinellen Lernens sind.

5. Verfahren nach einem der vorhergehenden Ansprüche, **dadurch gekennzeichnet, dass** zumindest der Software-Algorithmus (4) zum Durchführen des Schritts i) in einem Softwaremodul (6) einer elektronischen Vorrichtung installiert ist, wobei die elektronische Vorrichtung konfiguriert ist, um mit einer Druckvorrichtung (2) verbunden zu werden, die dafür vorgesehen ist, den Schritt iii) auszuführen.

6. Verfahren nach dem vorhergehenden Anspruch, **dadurch gekennzeichnet, dass** die elektronische Vorrichtung und/oder das Softwaremodul (6) Schnittstellenmittel (11) zum Laden der Bilder und/oder der Texte und/oder der Schlüsselwörter, die die Eingaben (T₁, T₂, Tₙ...) für den Verarbeitungsprozess bilden, umfassen.

7. Verfahren nach einem der vorhergehenden Ansprüche, **dadurch gekennzeichnet, dass** der zumindest eine Software-Algorithmus der künstlichen Intelligenz (4) zum Durchführen des Schritts i) mit einer Datenbank verbunden ist, in der eine Reihe von Ausgangsbildern und/oder Texten und/oder Schlüsselwörtern gespeichert sind.

8. Verfahren nach einem der vorhergehenden Ansprüche, **dadurch gekennzeichnet, dass** der physische Träger (S) ein Etikett ist, das dafür vorgesehen ist, auf einen Artikel aufgebracht zu werden.

9. System (1) zum digitalen Drucken von Bildern (P) auf physische Träger (S), umfassend:
- ein Softwaremodul (6), das in einer elektronischen Vorrichtung installiert und konfiguriert ist, um ein digitales Bild (D1) zu erzeugen;
- ein zusätzliches Softwaremodul (10), das in einer elektronischen Vorrichtung installiert und konfiguriert ist, um das digitale Bild (D1) in ein Bild (D2) mit einem zum Drucken geeigneten Format zu konvertieren;
- eine Vorrichtung (2) zum Drucken des konvertierten Bildes (D2) auf einen physischen Träger (S), um so den physischen Träger (S) mit dem gedruckten Bild (P) zu erhalten, wobei die Druckvorrichtung (2) mit dem zusätzlichen Softwaremodul (10) verbunden ist;
wobei zumindest das Softwaremodul (6) Schnittstellenmittel (11), die konfiguriert sind, um Bilder und/oder Texte und/oder Schlüsselwörter in das Softwaremodul (6) zu laden, und zumindest einen Software-Algorithmus der künstlichen Intelligenz (4), der konfiguriert ist, um die Bilder und/oder Texte und/oder Schlüsselwörter zu verarbeiten und das digitale Bild (D1) zu erzeugen, umfasst; und
in dem das zusätzliche Softwaremodul (10) einen entsprechenden Software-Algorithmus der künstlichen Intelligenz (8) umfasst, der konfiguriert ist, um einen zusätzlichen Verarbeitungsprozess während der Konvertierung des digitalen Bildes (D1) in ein Bild (D2) mit einem zum Drucken geeigneten Format durchzuführen, wobei die Eingaben (T3, T4, Tn...) für den zusätzlichen Verarbeitungsprozess die Pixeldichte, nämlich die Auflösung, des digitalen Bildes (D1), die Abmessungen des gedruckten Bildes (P), das Material des physischen Trägers (S), die Oberflächenrauheit des physischen Trägers (S) und die intrinsischen Eigenschaften der Oberfläche des physischen Trägers (S) umfasst, wobei die Ausgabe aus einem konvertierten Bild (D2) besteht, sodass das gedruckte Bild (P) eine vorbestimmte Auflösung aufweist.

## Revendications

1. Procédé d'impression numérique d'images (P) sur supports physiques (S), le procédé comprenant les étapes suivantes :
i) la génération d'une image numérique (D1) avec un format prédéterminé ;
ii) la conversion de l'image numérique (D1) en une image (D2) avec un format adapté à l'impression sur support physique (S) ;
iii) l'impression de l'image convertie (D2) sur le support physique (S) afin d'obtenir le support physique (S) avec l'image imprimée (P) ;
dans lequel au moins ladite étape i) est réalisée au moyen d'un processus pour le traitement, par au moins un algorithme logiciel d'intelligence artificielle (4), d'une série d'entrées (T₁, T₂, Tₙ...) comprenant des images et/ou des textes et/ou des mots-clés, l'image numérique (D1) représentant la sortie du processus de traitement de ladite étape i) ; et
en ce que ladite étape ii) est réalisée au moyen d'un logiciel dédié à l'aide d'un algorithme logiciel d'intelligence artificielle supplémentaire (8), ledit algorithme logiciel d'intelligence artificielle supplémentaire (8) réalisant un processus de traitement supplémentaire afin de faire varier les paramètres d'impression du format converti de ladite image numérique (D1) ; et
en ce que les entrées (T3, T4, Tn...) pour ledit processus de traitement supplémentaire comprennent la densité de pixels, à savoir la résolution, de l'image numérique (D1), les dimensions de l'image imprimée (P), le matériau du support physique (S), la rugosité de surface du support physique (S) et les caractéristiques intrinsèques de la surface du support physique (S), la sortie étant constituée d'une image convertie (D2) de sorte que l'image imprimée (P) a une résolution prédéterminée.

2. Procédé selon la revendication précédente, **caractérisé en ce que** le format prédéterminé de ladite image numérique (D1) est RVB et le format adapté à l'impression de l'image convertie (D2) est CMJN.

3. Procédé selon la revendication 1, **caractérisé en ce que** la résolution de ladite image imprimée (P) est d'au moins 200/300 dpi.

4. Procédé selon l'une quelconque des revendications précédentes, **caractérisé en ce que** l'algorithme logiciel d'intelligence artificielle (4) utilisé à ladite étape i) et/ou l'algorithme logiciel d'intelligence artificielle supplémentaire (8) utilisé à ladite étape ii) sont du type apprentissage automatique.

5. Procédé selon l'une quelconque des revendications précédentes, **caractérisé en ce qu'**au moins l'algorithme logiciel (4) permettant de réaliser l'étape i) est installé dans un module logiciel (6) d'un dispositif électronique, ledit dispositif électronique étant configuré pour être connecté à un dispositif d'impression (2) destiné à mettre en œuvre ladite étape iii).

6. Procédé selon la revendication précédente, **caractérisé en ce que** ledit dispositif électronique et/ou ledit module logiciel (6) comprennent un moyen d'interface (11) pour charger lesdites images et/ou lesdits textes et/ou lesdits mots-clés qui forment les entrées (T₁, T₂, Tₙ...) pour le processus de traitement.

7. Procédé selon l'une quelconque des revendications précédentes, **caractérisé en ce que** ledit au moins un algorithme logiciel d'intelligence artificielle (4) pour réaliser ladite étape i) est connecté à une base de données dans laquelle sont stockées une série d'images et/ou de textes et/ou de mots-clés de départ.

8. Procédé selon l'une quelconque des revendications précédentes, **caractérisé en ce que** ledit support physique (S) est une étiquette destinée à être appliquée sur un article.

9. Système (1) d'impression numérique d'images (P) sur supports physiques (S), comprenant :
- un module logiciel (6) installé dans un dispositif électronique et configuré pour générer une image numérique (D1) ;
- un module logiciel supplémentaire (10) installé dans un dispositif électronique et configuré pour convertir l'image numérique (D1) en une image (D2) avec un format adapté à l'impression ;
- un dispositif (2) d'impression de l'image convertie (D2) sur support physique (S) de manière à obtenir le support physique (S) avec l'image imprimée (P), ledit dispositif d'impression (2) étant connecté au module logiciel supplémentaire (10) ;
dans lequel au moins le module logiciel (6) comprend un moyen d'interface (11) configuré pour charger des images et/ou des textes et/ou des mots-clés dans ledit module logiciel (6) et au moins un algorithme logiciel d'intelligence artificielle (4) configuré pour traiter les images et/ou les textes et/ou les mots-clés et pour générer l'image numérique (D1) ; et
en ce que ledit module logiciel supplémentaire (10) comprend un algorithme logiciel d'intelligence artificielle respectif (8) configuré pour réaliser un processus de traitement supplémentaire pendant la conversion de l'image numérique (D1) en une image (D2) avec un format adapté à l'impression, les entrées (T3, T4, Tn...) pour ledit processus de traitement supplémentaire comprenant la densité de pixels, à savoir la résolution, de l'image numérique (D1), les dimensions de l'image imprimée (P), le matériau du support physique (S), la rugosité de surface du support physique (S) et les caractéristiques intrinsèques de la surface du support physique (S), la sortie étant constituée d'une image convertie (D2) de sorte que l'image imprimée (P) a une résolution prédéterminée.
